# EUROPEAN PATENT APPLICATION

(11) **EP 4 809 810 A1**
(43) Date of publication of application: **23.09.2026**
(21) Application number: 24891787.4
(22) Date of filing: 15.11.2024
(51) Int. Cl.: A01D 34/68, A01B 71/06

(54) **TRACTOR INCLUDING TRACTOR MOWER MODULE**

(30) Priority: 15.11.2023 KR 20230158316
(71) Applicant: Root Inc., Nonsan-si, Chungcheongnam-do 32903 (KR)
(72) Inventor: KIM, Jong Hak, Nonsan-si Chungcheongnam-do 32903 (KR); KIM, Myung Hun, Nonsan-si Chungcheongnam-do 32903 (KR); SHIN, Deok Gi, Nonsan-si Chungcheongnam-do 32903 (KR); KO, Joon Young, Nonsan-si Chungcheongnam-do 32903 (KR)
(74) Representative: AWA Sweden AB
(86) International application number: PCT/KR2024/018007
(87) International publication number: WO 2025/105841

(57) **Abstract**

A tractor including a tractor mower module according to an embodiment of the present invention comprises: a frame coupled below the tractor body; a power transmission unit installed in the tractor body; a front bracket provided on one side of the frame; and a tractor mower module that is connected to the front bracket and power transmission unit when the tractor body is moving forward, and separated from same when the tractor body is moving backward, wherein the power transmission unit comprises a first PTO coupling provided with a first jaw so as to be connected to the tractor mower module to transmit power, and the tractor mower module may comprise a second PTO coupling, provided with a second jaw, that engages with the first PTO coupling.

## Description

### TECHNICAL FIELD

The present invention relates to a tractor including a tractor mower module, and more particularly, to a tractor including a tractor mower module that can be attached and detached using a one-touch fastening method.

### BACKGROUND ART

A mower device is generally a mechanism that cuts grass, such as lawn, using a cutting blade that rotates at high speed. The cutting blade of the mower device is driven by power supplied from an internal power source or an external power source.

The mower device that is driven by power supplied from an external power source is detachably mounted on a tractor or the like for use. With the introduction of compact tractors, demand has been increasing overseas for mower devices that can be attached to the compact tractors to manage gardens, parks, and lawns. The mower device is driven by power transmitted from the power transmission system of the tractor.

However, conventional mower devices have the inconvenience of requiring an operator to manually connect and disconnect them from the tractor. In addition, since the operator has to connect or disconnect the fastening structure of the mower device to or from the connection structure of the tractor, the time required for attachment and detachment of the mower device increases. Furthermore, because the operator performs the attachment and detachment work under the tractor, the attachment and detachment work may be difficult.

Therefore, there is a need for research on a tractor including a mower device that can be easily attached and detached.

### DISCLOSURE

### TECHNICAL PROBLEM

The present invention has been made to solve the aforementioned problems, and the objective of the present invention is to provide a tractor including a tractor mower module that can be easily attached and detached.

### TECHNICAL SOLUTION

A tractor including a tractor mower module in accordance with one embodiment of the present invention may comprise: a frame coupled to a lower portion of a tractor body; a power transmission unit installed on the tractor body; a front bracket provided on one side of the frame; and a tractor mower module which is connected to the front bracket and the power transmission unit when the tractor body moves forward and separated from the front bracket and the power transmission unit when the tractor body moves backward, wherein the power transmission unit includes a first PTO coupling having a first jaw formed to be connected to the tractor mower module and transmit power thereto, and the tractor mower module includes a second PTO coupling having a second jaw formed to engage the first PTO coupling.

Further, the tractor mower module may include: a cutting device connected to the second PTO coupling to receive power; a mower deck to which the cutting device is coupled; and a front link part provided on one side of the mower deck and configured to be engaged with the front bracket when the tractor body moves forward.

Furthermore, the power transmission unit may include: a power transmission shaft for rotating the first PTO coupling; a bearing housing that rotatably supports the first PTO coupling; and a housing body that supports the bearing housing and is rotatably connected to one side of the frame.

In addition, an inclined guide plate may be provided on one side of the housing body, and guide members may be provided on the mower deck at a predetermined interval on both left and right sides of the second PTO coupling to guide a movement path of the housing body by contacting the inclined guide plate.

Further, the first PTO coupling and the second PTO coupling may be configured as a dog clutch having interlocking shapes.

### EFFECT OF THE INVENTION

According to the tractor including a tractor mower module in accordance with one embodiment of the present invention, the tractor mower module can be easily attached to and detached from the tractor using a one-touch fastening method.

### BRIEF DESCRIPTION OF THE DRAWINGS

FIG. 1 is a partial side view of a tractor including a tractor mower module according to one embodiment of the present invention.
FIG. 2 is a schematic perspective view of a power transmission unit according to one embodiment of the present invention.
FIG. 3 is a partial perspective view of the power transmission unit according to one embodiment of the present invention.
FIG. 4 is a schematic partial perspective view showing the appearance of a first PTO coupling and a second PTO coupling according to one embodiment of the present invention.
FIG. 5a is a side view showing the state just before the tractor mower module is coupled to the tractor, and FIG. 5b is a side view showing the state in which the tractor mower module is coupled to the tractor.
FIG. 6 is a schematic perspective view of the tractor mower module according to one embodiment of the present invention.
FIG. 7 is a partial perspective view showing the power transmission unit connected to the tractor mower module according to one embodiment of the present invention.

### BEST MODE

Hereinafter, specific embodiments for implementing the idea of the present invention will be described in detail with reference to the accompanying drawings.

In addition, in describing the present invention, detailed explanation of well-known components or functions will be omitted when it is determined that such descriptions could obscure the essence of the present invention.

Furthermore, when a component is described as being "connected to", "supported by", or "in contact with" another component, it should be understood that it may be directly connected to, supported by, or in contact with that other component, but there may also be other components present in between.

The terms used in the present specification are merely intended to describe specific embodiments and are not intended to limit the scope of the present invention. Unless clearly indicated otherwise by the context, singular expressions include plural expressions.

In addition, expressions such as "upper," "lower," and "side" in the present specification are based on the orientation shown in the drawings, and it should be noted in advance that these expressions may differ if the orientation of the subject changes. For the same reason, some components in the accompanying drawings are exaggerated, omitted, or schematically illustrated, and the sizes of the respective components do not necessarily reflect their actual sizes.

Further, terms including ordinals such as first, second, etc., may be used to describe various components, but the components are not limited by such terms. These terms are used solely for the purpose of distinguishing one component from another.

The term "including" as used in the specification specifies the presence of particular characteristics, regions, integers, steps, operations, elements and/or components, but does not exclude the presence or addition of other particular characteristics, regions, integers, steps, operations, elements, components, and/or groups thereof.

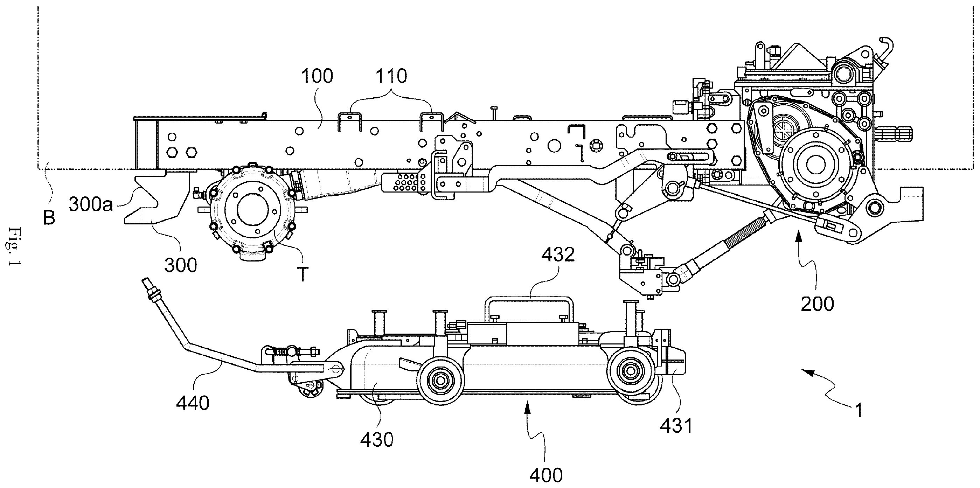

FIG. 1 is a partial side view of a tractor including a tractor mower module according to one embodiment of the present invention.

Referring to FIG. 1, a tractor 1 including a tractor mower module (hereinafter referred to as the "tractor") according to one embodiment of the present invention may include a frame 100 coupled to a lower portion of a tractor body B, a power transmission unit 200 provided on the tractor body B to transmit power to a tractor mower module 400, a front bracket 300 provided on one side of the frame 100, and a tractor mower module 400, which is connected to the front bracket 300 and the power transmission unit 200 when the tractor body B moves forward, and is separated from the front bracket 300 and the power transmission unit 200 when the tractor body B moves backward.

The tractor body B may be a member that forms the exterior of the tractor and may vary depending on the type of tractor. Various components necessary for the operation of the tractor may be connected or coupled to the tractor body B.

The frame 100 may be coupled to a lower portion of the tractor body B. The frame 100 may be formed with an open rear side. For example, the frame 100 may be provided in a "⊏" shape. The frame 100 may be provided with at least one fastening bracket for securing the frame 100 to the tractor body B.

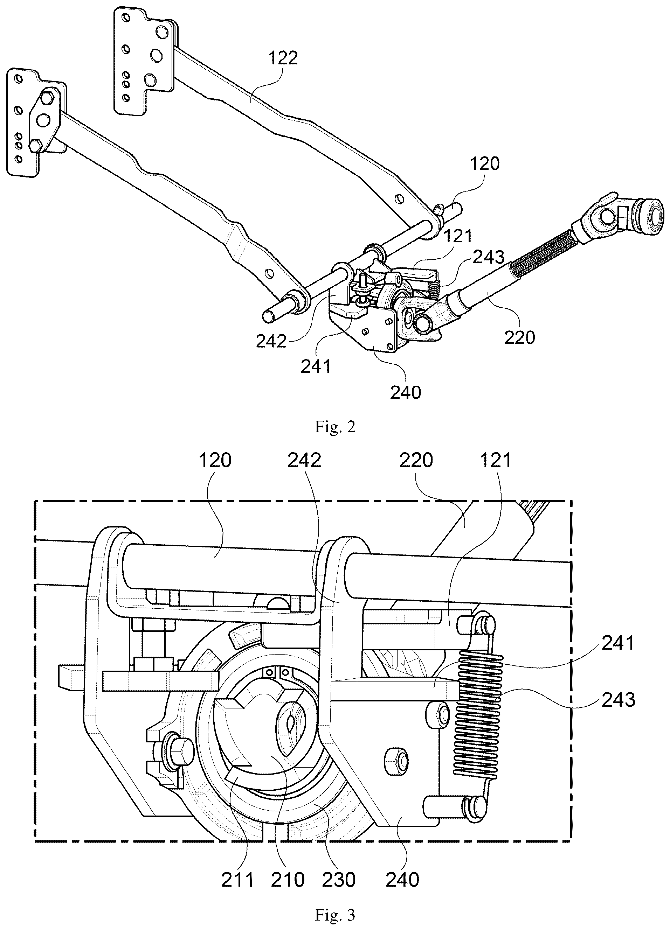

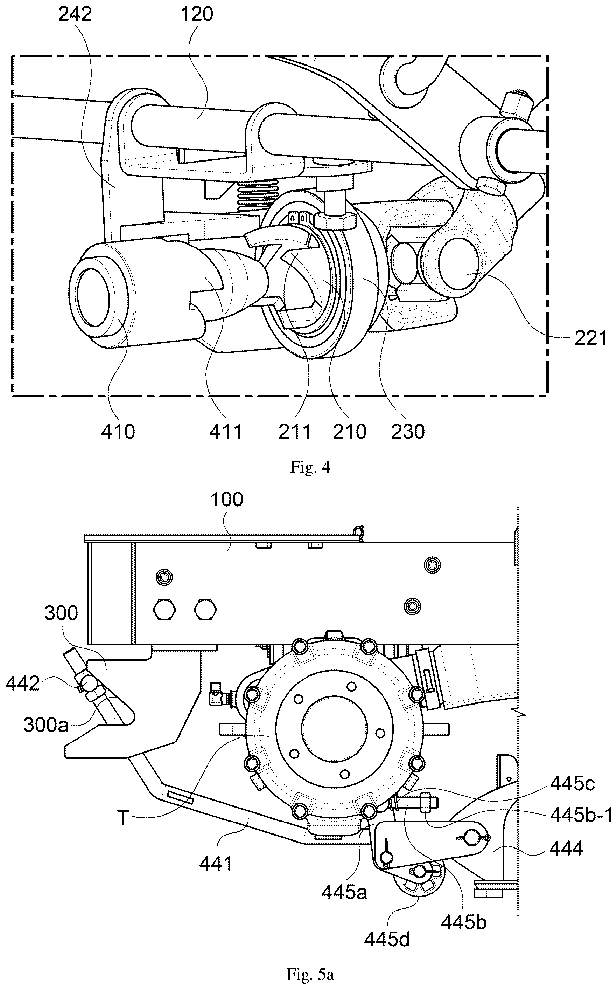

FIG. 2 is a schematic perspective view of a power transmission unit according to one embodiment of the present invention, FIG. 3 is a partial perspective view of the power transmission unit according to one embodiment of the present invention, and FIG. 4 is a schematic partial perspective view showing the appearance of a first PTO coupling and a second PTO coupling according to one embodiment of the present invention.

Referring to FIGS. 2 to 4, a power transmission unit 200 may be provided on one side of the frame 100. For example, the power transmission unit 200 may be provided at the rear end of the frame 100. The power transmission unit 200 may be connected to the tractor mower module 400 to transmit power to the tractor mower module 400. In other words, the power transmission unit 200 may be connected to the tractor mower module 400 to drive a cutting device (not shown) provided in the tractor mower module 400.

The power transmission unit 200 may include a first PTO coupling 210 having a first jaw 211 formed to be connected to the tractor mower module 400 and transmit power thereto, a power transmission shaft 220 for rotating the first PTO coupling 210, a bearing housing 230 that rotatably supports the first PTO coupling 210, and a housing body 240 that supports the bearing housing 230 and is rotatably connected to one side of the frame 100.

The first jaw 211 may be formed at the end of the first PTO coupling 210. The first jaw 211 may be formed in a shape that engages with a second jaw 411 of a second PTO coupling 410 of the tractor mower module 400. In other words, the first jaw 211 and the second jaw 411 may be provided in shapes that interlock with each other. For example, the first PTO coupling 210 and the second PTO coupling 410 may be configured in the shape of a dog clutch, having interlocking shapes.

The power transmission shaft 220 may be connected to the first PTO coupling 210, which is supported by the bearing housing 230, through a universal joint 221 to transmit power.

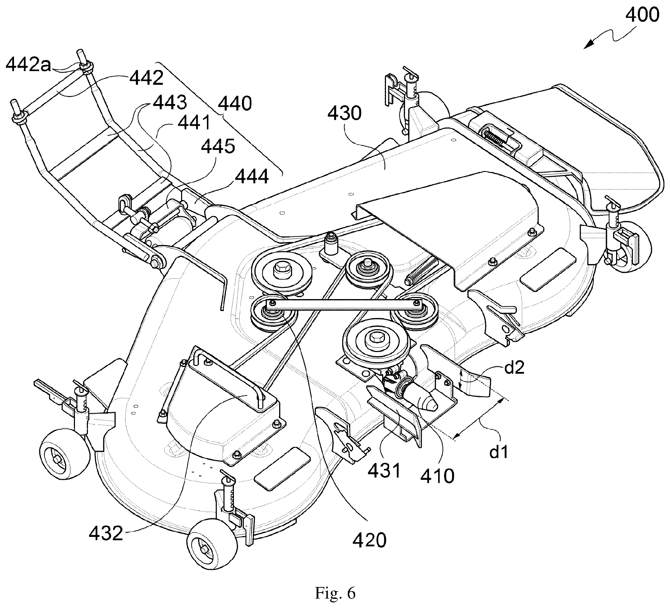

The bearing housing 230 may be supported by the housing body 240. The housing body 240 may support the bearing housing 230 by surrounding at least a portion of the bearing housing 230. Inclined guide plates 241 may be respectively provided on the outer sides of both side surfaces of the housing body 240. The inclined guide plates 241 can guide the movement path of the housing body 240 when the power transmission unit 200 is coupled to the tractor mower module 400. In other words, when the tractor body B moves forward, the inclined guide plates 241 may come into contact with the inner surfaces of guide members 431 (see FIG. 6) of the tractor mower module 400 and guide the movement path of the housing body 240. To this end, the inclined guide plates 241 may be formed such that their width increases from the front end to the rear end. A connecting part 242 may be provided on one side of the housing body 240. The connecting part 242 may be rotatably connected to a support bar 120 provided on the frame 100. The support bar 120 may be connected to a separate link structure 122 provided at a lower portion of the frame 100.

An elastic support member 243 may be connected to the other side of the housing body 240. The elastic support member 243 may be connected at both ends to a fixed panel 121, which is fixedly coupled to the support bar 120, and to a rear end of the housing body 240, respectively. The elastic support member 243 may elastically support the rear end of the housing body 240 so that it is rotatable within a predetermined range. Accordingly, the elastic support member 243 enables the housing body 240 to flexibly enter a rear end portion of the tractor mower module 400.

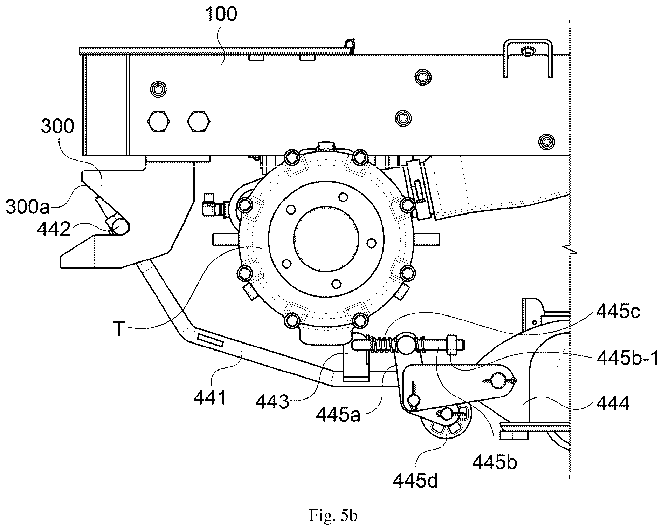

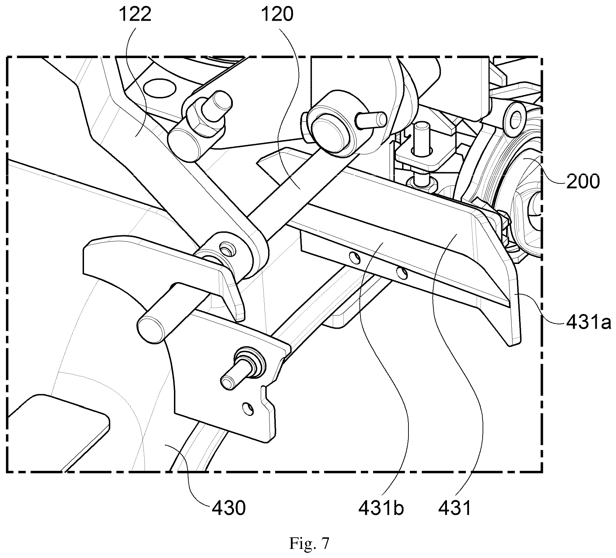

FIG. 5a is a side view showing the state just before the tractor mower module is coupled to the tractor, FIG. 5b is a side view showing the state in which the tractor mower module is coupled to the tractor, FIG. 6 is a schematic perspective view of the tractor mower module according to one embodiment of the present invention, and FIG. 7 is a partial perspective view showing the state in which the power transmission unit according to one embodiment of the present invention is connected to the tractor mower module.

Referring to FIGS. 5 to 7, a front bracket 300 for connection with the tractor mower module 400 may be provided on one side of the frame 100. The front bracket 300 may be selectively connected to a front link part 440 of the tractor mower module 400. The front bracket 300 may be connected to the front link part 440 of the tractor mower module 400 when the tractor body B moves forward, and may be disconnected from the front link part 440 when the tractor body B moves backward. To this end, at the front end of the front bracket 300, an insertion groove 300a into which at least a portion of the front link part 440 is inserted may be provided.

The tractor mower module 400 can be detachably connected to the frame 100. For example, the tractor mower module 400 can be connected to the power transmission unit 200 provided in the frame 100 to receive power when the tractor body B moves forward, and can be separated from the power transmission unit 200 when the tractor body B moves backward.

The tractor mower module 400 may include a second PTO coupling 410 that receives power from the power transmission unit 200, a cutting device (not shown) that is connected to the second PTO coupling 410 to receive power and cut grass or the like, a mower deck 430 which forms the exterior of the tractor mower module 400 and to which the second PTO coupling 410 and the cutting device (not shown) are coupled, and a front link part 440 that is provided on one side of the mower deck 430 and is inserted into and connected to the front bracket 300 when the tractor body B moves forward.

The second PTO coupling 410 may be provided at the rear end of the mower deck 430. The second jaw 411 (see FIG. 4) may be provided at the rear end of the second PTO coupling 410. The second jaw 411 may be formed in a shape that engages with the first jaw 211 of the first PTO coupling 210.

The guide members 431 may be provided on both sides in the width direction of the second PTO coupling 410. The guide members 431 may guide the insertion of the housing body 240 to assist in easy coupling of the first PTO coupling 210 and the second PTO coupling 410. To this end, the rear ends of the guide members 431 may be provided with expanded portions 431a whose spacing in the width direction increases toward the rear. In addition, reinforcing ribs 431b may be provided on the side surfaces of the guide members 431 to prevent damage to the guide members 431.

An inner spacing d1 in the width direction of the guide members 431 may be set such that, when the housing body 240 is inserted into the guide members 431, the center positions of the first PTO coupling 210 and the second PTO coupling 410 in the left-right direction are aligned. In addition, a height d2 of the guide members 431 may be set such that, when the housing body 240 is inserted into the guide members 431, the center positions of the first PTO coupling 210 and the second PTO coupling 410 in the up-down direction are aligned. In other words, when the housing body 240 is introduced into the guide members 431, the support bar 120 provided on the frame 100 comes into contact with the upper surfaces of the guide members 431, thereby determining the vertical position of the housing body 240. The height of the guide members 431 may be set such that the center positions of the first PTO coupling 210 and the second PTO coupling 410 in the up-down direction are aligned in the state where the support bar 120 is in contact with the upper surfaces of the guide members 431. As a result, the guide members 431 enable the rotational centers of the first PTO coupling 210 and the second PTO coupling 410 to be easily aligned coaxially.

The cutting device may receive power from the second PTO coupling 410. For example, the cutting device may include a cutting device drive unit 420 including at least one pulley, and the second PTO coupling 410 may be connected to the cutting device drive unit 420 to transmit power to the cutting device drive unit 420. A blade of the cutting device may be rotated by the cutting device drive unit 420. The blade may be exposed below the mower deck 430 to cut grass or the like.

The mower deck 430 may form the exterior of the tractor mower module 400. After a front wheel T of the tractor 1 passes over the upper portion of the mower deck 430, the power transmission unit 200 and the tractor mower module 400 may be connected. In this case, a front wheel guide 432 may be provided on the upper portion of the mower deck 430 to guide the movement path of the tractor 1.

The front link part 440 may be provided at the front end of the mower deck 430. The front link part 440 may include, for example, a pair of front links 441 extending forward of the mower deck 430, a locking bar 442 provided at the front ends of the front links 441 and selectively inserted into the front bracket 300, at least one connecting link 443 connecting the front links 441 in the width direction, a mounting bracket 444 that rotatably connects the rear ends of the front links 441 to the mower deck 430, and a wheel module 445 that is provided between the front links 441 and in contact with the ground to support the lower portion of the front link part 440.

The locking bar 442 may be secured at both ends to the front links 441 through locking bar fixing nuts 442a, and by adjusting the positions of the locking bar fixing nuts 442a, the distance between the front bracket 300 and the front end of the tractor mower module 400 can be adjusted.

The wheel module 445 may include a wheel housing 445a connected to the mounting bracket 444, a slide bar 445b, one end of which is fixed to the connecting link 443 and the other end of which is slidably connected to the wheel housing 445a, an elastic member 445c connected to the slide bar 445b and the wheel housing to apply an elastic force in a direction that rotates the front ends of the front links 441 upward, and a wheel 445d rotatably coupled to the wheel housing 445a and in contact with the ground. A fixing nut 445b-1 may be provided at the rear end of the slide bar 445b to prevent the slide bar 445b from coming off.

The initial position of the locking bar 442 of the front links 441 may be set by the elastic member 445c. For example, the initial position of the locking bar 442 may be set such that, when the tractor body B moves forward, the locking bar 442 is positioned in front of the insertion groove 300a of the front bracket 300. During the process of the locking bar 442 being inserted into the insertion groove 300a, the locking bar 442 may come in contact with the inner surface of the insertion groove 300a and rotate downward. Thereafter, when the tractor body B moves backward and the locking bar 442 moves to the outside of the insertion groove 300a, the locking bar 442 may rotate upward by a predetermined angle due to the elastic force of the elastic member 445c, returning to its initial position. By maintaining the initial position of the locking bar 442 through the elastic member 445c in this way, the locking bar 442 can be easily inserted into the front bracket 300.

Although the embodiments of the present invention have been described above as specific embodiments, these are merely examples. The present invention is not limited to the above, and should be construed as having the broadest scope in accordance with the basic concepts disclosed in the present specification. Those skilled in the art may implement variations not specifically described herein by combining or substituting the disclosed embodiments, but such variations still fall within the scope of the present invention. Furthermore, it will be apparent that those skilled in the art may easily make modification or alterations to the disclosed embodiments based on the content of the present specification, and such modifications or alterations also fall within the scope of the present invention.

### INDUSTRIAL APPLICABILITY

According to the present invention, the tractor mower module can be easily attached to and detached from the tractor using a one-touch fastening method.

## Claims

1. A tractor including a tractor mower module, the tractor comprising:
a frame coupled to a lower portion of a tractor body;
a power transmission unit provided on the tractor body to transmit power to the outside of the tractor body;
a front bracket provided on one side of the frame; and
a tractor mower module which is connected to the front bracket and the power transmission unit when the tractor body moves forward and separated from the front bracket and the power transmission unit when the tractor body moves backward,
wherein the power transmission unit includes a first PTO coupling having a first jaw formed to be connected to the tractor mower module and transmit power thereto, and
the tractor mower module includes a second PTO coupling having a second jaw formed to engage the first PTO coupling.

2. The tractor of claim 1, wherein the tractor mower module includes:
a cutting device connected to the second PTO coupling to receive power;
a mower deck to which the cutting device is coupled; and
a front link part provided on one side of the mower deck and configured to be engaged with the front bracket when the tractor body moves forward.

3. The tractor of claim 2, wherein the power transmission unit includes:
a power transmission shaft for rotating the first PTO coupling;
a bearing housing that rotatably supports the first PTO coupling; and
a housing body that supports the bearing housing and is rotatably connected to one side of the frame.

4. The tractor of claim 3, wherein an inclined guide plate is provided on one side of the housing body, and
guide members are provided on the mower deck at a predetermined interval on both left and right sides of the second PTO coupling to guide a movement path of the housing body by contacting the inclined guide plate.

5. The tractor of claim 1, wherein the first PTO coupling and the second PTO coupling are configured as a dog clutch having interlocking shapes.
